# EUROPÄISCHE PATENTANMELDUNG

(11) **EP 1 182 615 A1**
(43) Veröffentlichungstag der Anmeldung: **27.02.2002**
(21) Anmeldenummer: 00117277.4
(22) Anmeldetag: 16.08.2000
(51) Int. Cl.: G06T 11/20, G06F 3/033

(54) **Verfahren und Computer zum Anzeigen von Informationen**

(71) Anmelder: MarCom, Marketing & Communications, 90402 Nürnberg (DE)
(72) Erfinder: Hagel, Dettmar, 90482 Nürnberg (DE)

(57) **Zusammenfassung**

Die Erfindung betrifft ein Verfahren und einen Computer zum Verarbeiten und zum Anzeigen von Informationen auf einem Bildschirm in Form von Informationsblöcken und zu deren Auswahl, wobei
- die Informationsblöcke konzentrisch in Form von Tortendiagrammen oder Kugelsegmenten angeordnet werden
   und
- als Berührungsflächen ausgebildet werden, bei deren Berührung ein Schaltvorgang ausgelöst wird.

## Beschreibung

Die Erfindung betrifft ein Verfahren zum Anzeigen von Informationen auf einem Bildschirm in Form von Informationsblöcken und zu deren Auswahl, sowie eine Vorrichtung mit einem Computer und einem Monitor, auf dem die Informationsblöcke angezeigt werden.

Üblicherweise werden Informationen auf einem Bildschirm tabellarisch angezeigt. Diese an sich klare und übersichtliche Form der Anordnung hat sich jedoch in mehrerlei Hinsicht als unzulänglich erwiesen:

Ist die Zahl der anzuzeigenden Informationen groß, so müssen diese in eine Vielzahl von Feldern, die in Zeilen und Spalten gruppiert sind, aufgeteilt werden, was die Übersicht erschwert und zuviel Bildschirm-Arbeitsfläche in Anspruch nimmt.

Üblicherweise werden die Daten daher in Gruppen zusammengefaßt, wobei sich der Inhalt der Gruppe nach Anklicken des Feldes des Oberbegriffs öffnet.
Verbreitet ist dabei die Anordnung einer Reihe von Feldern für Oberbegriffe als Zeile, wobei die einzelnen Felder durch Anklicken und Herunterziehen mit dem Cursor zugänglich werden (sog. Pulldown-Menue).
Der Nachteil dieser sogenannten Pull-Verfahren ist, daß Informationen stets nur durch Handlung des Benutzers zugänglich werden, und die Veränderung wichtiger Daten nicht sofort erkennbar wird.

Zudem verhindert das entstehende Raster eine Gewichtung der einzelnen Felder nach Größe und Form. Wird jedoch die Ordnung in gleichförmige Raster aufgegeben, leidet die Übersichtlichkeit erheblich.
Daher sind Informationen auf dieser Basis vorwiegend über eine im Feld eingetragene verbale Bezeichnung zu erfassen, die erst gelesen und kognitiv verarbeitet werden muß, bevor die Information selbst abgefragt und bearbeitet werden kann.

In zunehmendem Maße wird in modernen nachrichtentechnischen Systemen die Erfordernis gesehen, Informationen - evtl. nach gewählten Voreinstellungen des Benutzers - diesem ohne gesonderte Abfrage zuzuspielen, etwa in zusätzlichen, sich selbsttätig eröffnenden Fenstern auf dem Bildschirm.
Da diese sog. Push-Technologie aber insbes. im Internet von Werbetreibenden gerne zu Reklameeinblendungen (sog. Banner und Interstitials) verwendet wird, und die Einblendungen oft unwillkürlich und daher störend im Arbeitsfeld eines Bildschirms erscheinen, wird der Einsatz in professionellen Anwendungen eher vermieden, bzw. auf Störmeldungen und Notrufe beschränkt.
Auch verbietet sich eine größere Zahl solcher Fenster schon aus Platzgründen.

Besonders schwierig ist daher die hervorgehobene Anzeige von variablen Informationseinheiten auf Bildschirmen, da bei der Auswahl eines speziellen Informationsblocks die anderen Informationsblöcke unsichtbar sind und deren Überwachung deshalb nicht möglich ist. Dies betrifft sowohl die Navigation in Rastern, Skalen und Pulldown-Menues, wie auch die optische Selektion durch Vergrößerung einzelner Bildschirminhalte - die sog. Zoom-Technik.

Ein anderer Aspekt ergibt sich im Vergleich von Bildschirmdarstellungen mit herkömmlichen Anzeigen einer Vielzahl von Informationen, etwa in Schaltpulten oder Cockpits:

Hier ist es zwar mit herkömmlicher Technik nicht möglich, beliebig differenzierte und unterschiedliche qualitative Informationen in einem Anzeigefeld unterzubringen, dagegen ist es möglich, neben absoluten Werten dynamische Veränderungen dieser Werte durch einfache Zeigerinstrumente übersichtlich und schnell erfaßbar darzustellen.

Doch zur Anzeige einer Vielzahl verschiedener Daten und Betriebszustände und Ihrer Steuerung müssen in herkömmlicher Technik große Schalt- und Steuerpulte mit einer Vielzahl verschiedener Anzeigen, sei es analogen Zeigerinstrumenten oder digitalen Ziffern- oder Diagrammen, oftmals garniert mit Warnlampen oder -Feldern, sowie Schaltern unterschiedlichster Art eingesetzt werden.
Ein Nachteil derartiger Steuerpulte ist, daß für eine differenzierbare Erfaßbarkeit der einzelnen Daten und Betriebszustände die Anzeigeelemente eine Größe aufweisen müssen, die bei größeren Anzeigentafeln keinen Überblick mehr über die Gesamtheit der Betriebszustände erlauben, da ein Teil der Instrumente zwangsläufig außerhalb des primären Gesichtsfeldes des Beobachters liegt.

Man behilft sich auch hier mit der Zusammenstellung zu Funktionsgruppen, deren Zustand ihrerseits über Gruppeninstrumente angezeigt werden.
Dies erhöht jedoch nicht nur den dafür erforderlichen technischen Aufwand, sondern schafft im Ergebnis noch mehr Instrumente und damit u.U. noch mehr Konfusion.

Problematisch ist dabei insbesondere, daß sich viele Funktionen nicht vernünftig im Gruppenkontext steuern lassen, sondern einzeln bedient werden müssen.
Dies bedeutet, daß der Operator zwar zunächst auf den Gruppenanzeigen einen Funktionszustand erkennen kann, der Handlungsbedarf signalisiert, dann aber auf die einzelne Gruppe überwechseln muß, um dort die Ursache differenziert zu erkennen und entsprechende Maßnahmen auszulösen.

Es ist offensichtlich, daß dies eine erhöhte Reaktionszeit und insbes. eine wesentlich größere Fehlerwahrscheinlichkeit beinhaltet.
Will man nun bei Anzeigen auf Bildschirmen den Vorteil solcher Analogistrumente nutzen, kann man diese natürlich als Darstellungsform übernehmen und vorteilhaft mit anderen Informationsfeldern kombinieren - so geschieht es z.B. bei manchen modernen KFZ-Amaturenbrettern.
Sind jedoch eine Vielzahl sich verändernder Parameter anzuzeigen - wie z.B. in einem Flugzeugcockpit - so reicht der Platz bzw. die Auflösung der Darstellung dazu nicht aus.

Behilft man sich mit Auswahl- und Zoomfunktionen, gelegentlich ausgelagert in getrennte Bildschirmfenster (sog. Window-Technik), so ist auch hier der Übergang von der Gesamtsicht in das Einzelfenster für den Überblick und die schnelle und fehlerarme Bedienung von Nachteil, gerade bei Fensterwechsel sind "Fehlklicks" daher besonders häufig.

Bei modernen Flugzeugen benutzt man daher eine Kombination konventioneller Instrumente und mehreren Bildschirm-Kombinationsanzeigen.
Diese Technik ist jedoch aufwendig und wiederum auf einem einzelnen Bildschirm kaum in erforderlicher Auflösung darstellbar, wie zahlreiche Ausführungen in Computerspiel-Flugsimulatoren zeigen - hier muß zwangsläufig wieder auf Zoom-Techniken zurückgegriffen werden.

Es hat bisher offenbar vergleichswerise wenige Versuche gegeben, dieses Problem grundlegend zu lösen.
Jedoch setzt sich die WO-99/44164 mit diesem Thema sehr eingehend auseinander, und schlägt als ein übereinander geschichtetes Datenkarussel vor, dessen Handhabung aber kompliziert erscheint.
In jedem Falle ist auch hier der Nachteil, daß nur eine kleine Zahl von Datenblöcken unmittelbar überschaubar ist, und nach anderen erst "geblättert" werden muß.

Die Aufgabe der Erfindung ist es daher, eine Anordnungsweise der Informationsblöcke zu finden, also ein Verfahren und eine Vorrichtung zu deren Anzeige, die das Erkennen und Überwachen insbesondere variabler Informationsblöcke in der Menge anderer Informatonsblöcke ermöglicht und erleichtert.

Diese Aufgabe wird erfindungsgemäß dadurch gelöst, daß die Informationsblöcke in Form von konzentrischen Tortendiagrammen oder Segmenten einer dreidimensionalen Kugel angeordnet sind, wobei sich herausgestellt hat, daß der gemeinsame Mittelpunkt dem betrachtenden Auge einen Anhalt bietet, der das besonders rasche Auffinden einzelner Informationsblöcke gestattet.

Dabei ist es im Falle der konzentrischen Tortendiagramme denkbar, daß die Segmente zunächst in ihrer Breite (d.h. dem Innenwinkel des Segments) und Farbe geändert werden - wie dies bei Tortendiagrammen üblich ist. Daneben ist es aber auch möglich, mit unterschiedlichen Radien der Segmente zu arbeiten, und/oder die Randzonen unterschiedlich zu verformen., sie z.B. zu zahnen, mit Strahlen oder Texturen zu unterlegen, etc.
Ferner können die Blöcke mit unterschiedlichen Innen- und Außenradien ausgeführt werden, was sie allerdings konventionellen Tortendiagrammen unähnlich macht.
Es ist jedoch speziell dadurch möglich, auch den z.B. den Zeiteintritt von Veränderungen in einer Gruppe von Perioden zu kennzeichnen und schnell erfaßbar zu machen.

Soll dies differenzierter geschehen, kann man auf die Oberfläche eines Blocks eine Kurve projezieren, die z.B. symmetrisch um den Mittenradius angelegt wird, so wie sie in virtuellen Mischpulten von Musikbearbeitungsprogrammen üblich sind - wenngleich dort linear und ohne einen ähnliche Anordnung anderer Informationsblöcke.
Dazu kommen mögliche Oberflächengestaltungen und Texturen wie nachfolgend beim Kugeldiagramm beschieben.

Auch bei Kugelsegmenten ist es möglich, die Außenradien einzelner Segmente zu verändern, so daß sich z.B. virtuell ineinander gestecke Elemente gleicher Segmentformen aus unterschiedlichen Kugelgrößen ergeben.
Ferner ist es natürlich auch möglich, die Position der Elemente zueinander nach Erfordernis vorzubestimmen, sowie die Gewichtung einzelner Bereiche durch eine virtuelle Drehung der Kugel so zu bewirken, daß wichtige Informationseinheiten durch mittige Anordnung perspektivisch in den Vordergrund treten, während außermittig angelegte Informationsfelder verkleinert erscheinen.

Dieses Merkmal hat besondere Bedeutung bei Informationsblöcken, denen besondere Wichtigkeit zukommt, z.B. der Fluggeschwindigkeit gegenüber der Umgebungsluft.

Dabei ist es bevorzugt, daß die Größe eines Informationsblocks variabel ist, so daß ihm dann, wenn ihm besondere Wichtigkeit zukommt, eine heraustretende Größe verliehen werden kann. Dies ist etwa bei der Fluggeschwindigkeit während des Starts und der Landung der Fall.

Zudem kann jeder Informationsblock als Berührungsfläche ausgebildet werden, deren Berührung einen Schaltvorgang auslöst, der entweder ein weiteres Fenster mit differenzierteren Inhalten des Feldes aufruft, oder z.B. die Berührungsfläche in die Bildmitte rückt, also ein Kugeldiagramm verdreht, oder die Berührungsfläche vergrößert, wobei der Maßstab der Vergrößerung von der Zeit abhängig sein kann, wie lange die Berührungsfläche angetippt wird.
Ein erneutes Antippen der dann vergrößerten Berührungsfläche kann dann das ursprüngliche Diagramm wieder herstellen, soweit nicht gesonderte Berührungfelder vorgesehen sind.

Jedenfalls bleibt ein Bereich des Bildschirms reserviert, nach dessen Antippen unverzüglich der ursprüngliche Zustand wiederhergestellt wird, in dem alle Informationsblöcke sichtbar sind.

Die Informationsblöcke können nicht nur unterschiedliche Farben aufweisen, um deren Auffinden und Überwachen zu erleichtern. Die Farbgebung kann zudem variabel sein, etwa in der Intensität, die dann besonders hervorstechend gewählt wird, wenn dem Informationsblock besondere Bedeutung zukommt, aber weniger hervorstechend, wenn ihm eine geringere Bedeutung zukommt. So kann etwa die Anzeige einer Fluggeschwindigkeit beim Start- und Landevorgang in grellem Orange erfolgen, dagegen während des Reisefluges in nur blassem Orange.

Ein Informationsblock kann vorteilhafterweise auch rhythmisch aufblinken, wobei der Rhythmus variabel sein kann, um einen besonders kritischen Wert, der auf dem Informationsblock angezeigt wird, durch rasches Aufblinken besondere Beachtung zu verschaffen.

Der Informationsblock kann auch eine Oberflächentextur wie z.B. Prägungen aufweisen, die ihn hervorhebt oder zurücksetzt, je nach der Wichtigkeit der Anzeige, die der Informationsblock liefert.
Diese Textur kann variabel sein, um einen Informationsblock, den Bedürfnissen entsprechend, mehr oder weniger stark hervorzuheben, und die Veränderung der Textur kann auch weiter bevorzugt rhythmisch variabel erfolgen, so daß etwa konzentrisch auseinander- oder zusammenlaufende Linien erscheinen.

Daneben ist es möglich, Felder mit Prägungen und ähnlichen Oberflächengestaltungen zu versehen, die auch den Inhalt eines Feldes symbolisieren oder explizit in Form eines Pictogramms kennzeichnen.

Insgesamt schafft die Erfindung ein Verfahren und einen Computer zur Anzeige von Informationen, bei dem die physiologischen Eigenheiten des menschlichen Wahrnehmungsvermögens optimal genutzt werden, um eine größtmögliche Anzahl von Informationen so darzustellen, daß alle diese Informationen möglichst auf einen Blick erfaßt werden können.

Zu dieser Erfassung ist Zeit erforderlich, die durch die Lage und die entsprechende Gestaltung eines Informationsblockes verkürzt werden kann.
So ist es nach der Erfindung möglich, die einzelnen Informationsblöcke der Wichtigkeit nach so zu staffeln, daß - verbunden mit den genannten optischen Merkmalen - innerhalb der kürzest möglichen Zeit und mit geringster Aufmerksamkeit (also quasi affektiv) der Status verschiedenster, in den Feldern angezeigter Parameter samt ihrer möglichen dynamischen Veränderung erfaßbar ist.

Diese Anordnung und Gestaltung kann bevorzugt auch vom Inhalt der jeweiligen Information abhängig gemacht werden. So ist es zum Beispiel möglich, etwa die Öltemperatur eines Hubschrauberantriebs, oder die Volatilität eines Börsenkurses, die meist nur am Rande mit überwacht werden, in der Mitte des Blickfeldes, vergrößert, in Alarmfarbe und aufblinkend anzuzeigen, wenn diese sich in unüblicher Weise verändern sollte.

So ist der Anwender nicht gezwungen, seine Aufmerksamkeit Nebensächlichkeiten zuzuwenden, sondern er wird in der Mitte seines Blickfeldes auf ein unvorhergesehenes Verhalten in prominenter Weise aufmerksam gemacht.

Bevorzugt können mit einer solchen Notanzeige auch andere Informationsfelder betroffen werden, im beschriebenen Fall etwa die Steig- oder Sinkrate. Diese Informationsfelder werden dann ebenfalls hervorgehoben oder, falls erforderlich, in ihrer Anordnung verändert. Schließlich ist es auch möglich, in einem solchen Notfall die für diesen unerheblichen Informationsfelder abzuregeln, möglicherweise bis zum völligen Verschwinden, etwa die Datumsanzeige.

Die Erfindung geht also nicht, wie etwa die eingangs genannte WO 99/44164, von den technischen Möglichkeiten aus, sondern vom physiologischen Wahrnehmungsvermögen und kognitiven bzw. affektivem Verarbeitungsvermögen eines Anwenders.
Die Informationsblöcke werden deshalb nicht nur ihrer Wichtigkeit nach angeordnet und ausgebildet, sondern stets in Hinblick auf das menschliche Wahrnehmungs- und Verarbeitungsvermögen.
So wird auch darauf geachtet, daß nicht etwa der gesamte Bildschirm flackert, leuchtet und funkelt, wie ein Jahrmarkt, bei dem jeder Geräteaufsteller versucht, möglichst viel Aufmerksamkeit auf sich zu ziehen, sondern es wird stets die Gesamtheit der Bildschirmanzeige so beachtet, daß der wichtigste oder jeweils wichtigste Informationsblock besonders "ins Auge springt".

Der Gegenstand der Erfindung wird mittels den beiliegenden Zeichnungen noch näher erläutert, die jeweils in einer einzigen Figur schematisch einen Bildschirm zeigt, auf dem ein erfindungsgemäßes Diagramm dargestellt ist.

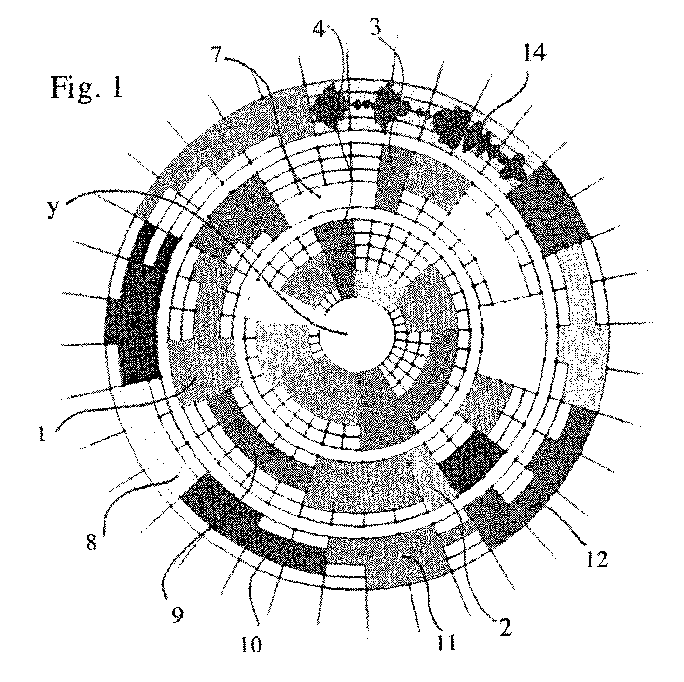

Fig. 1 zeigt ein modifiziertes Tortendiagramm, bei dem die Einteilung auf einen Pol bezogen ist, und nicht auf karthesische Koordinaten, wie sonst meist üblich.

Die Informationsblöcke 1 bis x weisen dabei radial nach außen und innen jeweils einen Kreisbogen als Begrenzung auf, die beiden anderen Begrenzungen sind geradlinig. Ein zentraler Informationsblock y ist kreisförmig. Die Informationsblöcke sind unterschiedlich groß und können unterschiedlich gefärbt sein.
So zeigen die Blöcke 1, 2, 3 und 4 jeweils Anzeigenelemente in voller Höhe (d,h, größtem Außen- und kleinstem Innenradius), jedoch mit relativ kleiner Breite - d.h. spitzem Winkel, während z.B. die Blöcke 7, 8, 9 große Breite, aber geringer Höhe und unterschiedliche Abstände zur Mitte auf.

Im äußeren Tortendiagramm werden auch Blöcke dargestellt, die durch wechselnde Radien noch differenziertere Informationen anzeigen können ( 10, 11, 12 ), wobei diese z.B. neben der Signalstärke auch eine Zeitfolge, Frequenz o. dergl. symbolisieren können.
In einer speziellen Ausprägung 13 können hier auch differenzierte Abläufe als Frequenz- und Wellendiagramme - wie etwa in der optischen Darstellung von Sequenzern in Musik-Kompostionsprogrammen dargestellt werden - jedoch werden sie dort nur als eine lineare Darstellung in simulierten Misch- und Steuerpulten verwendet.

In einer besonderen Oberflächengestaltung sind auf dem Block 14 symmetrische Wellenformen dargestellt, mit denen Ereignisse auch nach Merkmalshöhe, d.h. Amplitude, und Wellenlänge - d.h. ihrem periodischen Ablauf - dargestellt werden können.

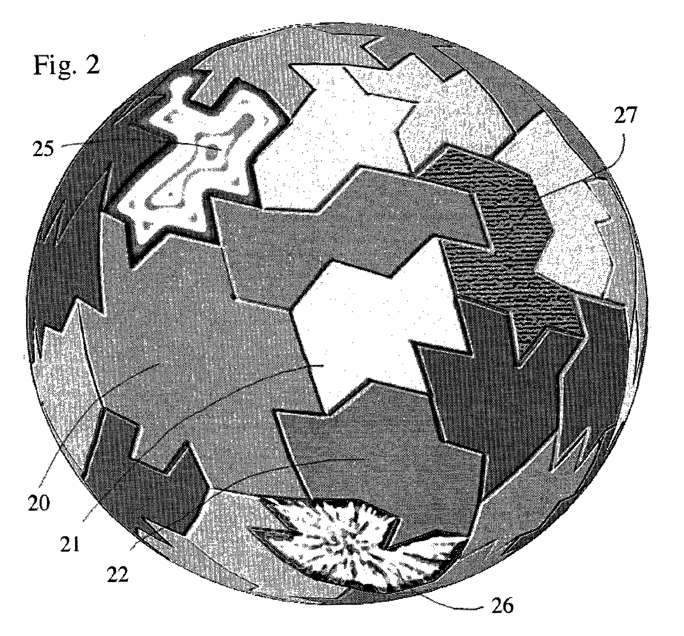

Fig. 2 zeigt die Darstellungsmöglichkeit auf der Oberfläche einer virtuellen Kugel.
Während die Segmente hierbei aus unterschiedlichen Formen und iun verschiedener Größe zusammengesetzt sein können , wie z.B. Block 20, 21 und 22, ist es insbes. mit Comptergrafik-Programmen leicht möglich, Blöcke durch Flash-Funktionen wie in Nr. 25 und 26, sowie Texturen (z.B. Block 27) und Farben (die anderen Blöcke, hier nur gerastert, und daher bei gleicher Farbtiefe nicht gut zu unterscheiden) weiter zu kennzeichnen.
Eine Bezeichnung des Anzeigeblocks, der durch Antippen auch zur Funktionseinheit wird, wurde hier weggelassen. Sie kann sowohl verbal wie auch durch ein Pictogramm auf der Blockoberfläche erfolgen.
Jedoch kann durch die charakteristische Form des Blocks, sowie durch Farbe und Textur auch eine funktionelle Zuordnung geschaffen werden, die eine derartigeBezeichnung - zumindestens für den geübten Anwender erübrigen dürfte.
Deshalb ist es empfehlenswert, diese Bezeichnung nur auf Wunsch einzublenden, oder etwa nur erscheinen zu lassen, wenn sich der Cursor dem entsprechenden Block nähert.

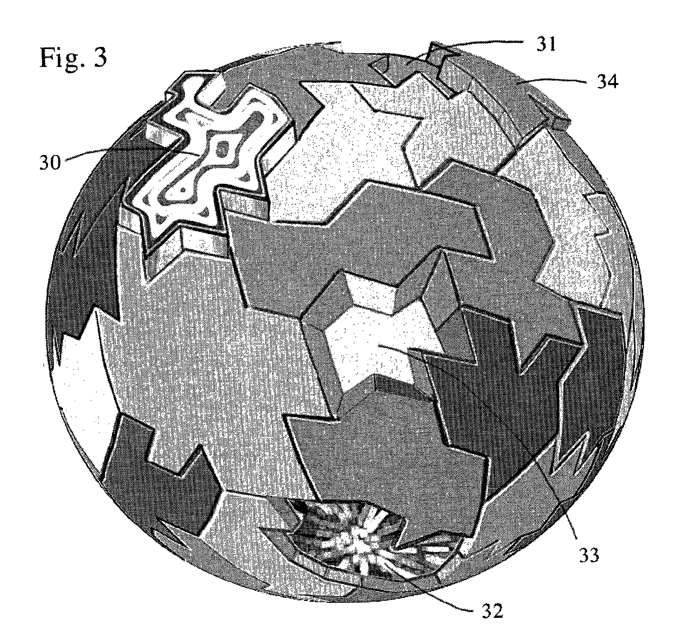

Fig. 3 zeigt in den Blöcken 30, 31 und 32, sowie 33 Beispiele, wie Informationseinheiten zur Anzeige aktueller Merkmale oder Handlungsbedarfs durch unterschiedliche Außenradien hervorgehoben werden können.

Es ist dabei jedoch empfehlenswert, nicht allzuviele Effekte in einer Darstellung zu mischen, und das Aufnahmevermögen des Bedieners nicht mit einer Überfülle von Indikatoren zu überlasten.

## Patentansprüche

1. Verfahren zum Anzeigen von Informationen auf einem Bildschirm in Form von Informationsblöcken und zu deren Auswahl, **dadurch gekennzeichnet, daß** die Informationsblöcke konzentrisch in Form von Tortendiagrammen oder Kugelsegmenten angeordnet werden.

2. Verfahren nach Anspruch 1, **dadurch gekennzeichnet, daß** die Informationsblöcke als Berührungsflächen ausgebildet werden, bei deren Berührung ein Schaltvorgang ausgelöst wird.

3. Verfahren nach einem der Ansprüche 1 oder 2, **dadurch gekennzeichnet, daß** die Randbereiche benachbarter Informationsblöcke nicht-geradlinig oder nicht-kreisbogenförmig ausgebildet werden und/oder mit Strahlen oder Texturen unterlegt werden.

4. Verfahren nach einem der Ansprüche 1 bis 3, **dadurch gekennzeichnet, daß** den Informationsblöcke unterschiedliche Größe verliehen wird.

5. Verfahren nach Anspruch 4, **dadurch gekennzeichnet, daß** die Größe mindestens eines der der Informationsblöcke variabel ausgebildet wird.

6. Verfahren nach einem der Ansprüche 1 bis 5, **dadurch gekennzeichnet, daß** die Farbe mindestens eines der Informationsblöcke unterschiedlich ausgebildet wird.

7. Verfahren nach Anspruch 6, **dadurch gekennzeichnet, daß** die Farbe eines Informationsblocks variabel ausgebildet wird.

8. Verfahren nach einem der Ansprüche 1 bis 7, **dadurch gekennzeichnet, daß** mindestens ein Informationsblock rhythmisch aufblinkend ausgebildet wird.

9. Verfahren nach einem der Ansprüche 1 bis 8, **dadurch gekennzeichnet, daß** mindestens eines der Informationsfelder mit einem Oberflächenmuster oder einer Oberflächentextur versehen wird.

10. Verfahren nach Anspruch 9, **dadurch gekennzeichnet, daß** die Oberflächentextur variabel ausgebildet wird.

11. Verfahren nach Anspruch 10, **dadurch gekennzeichnet, daß** die Oberflächentextur rhythmisch verlaufend variabel ausgebildet wird, so daß bevorzugt konzentrisch auseinanderlaufende oder zusammenlaufende oder das Informationsfeld überquerende Wellenmuster entstehen.

12. Verfahren nach einem der Ansprüche 1 bis 11, **dadurch gekennzeichnet, daß** die Vergrößerung, die Farbe, die Textur und/ oder der Rhythmus des Aufblinkens eines Informationsblock von der Größe abhängig ausgebildet wird, die der auf ihm angezeigte Wert erreicht.

13. Verfahren nach einem der Ansprüche 1 bis 12, **dadurch gekennzeichnet, daß** die Kugelsegmente als eine dreidimensionale Kugel ausgebildet werden, die so drehbar ist, daß ein bestimmtes Informationsfeld in der Bildmitte angeordnet ist.

14. Verfahren nach Anspruch 13, **dadurch gekennzeichnet, daß** mindestens eines der Kugelsegmente gegenüber benachbarten vergrößerbar, verkleinerbar, hervorspringend oder zurücktretend ausgebildet wird, so daß es ein Segment einer Kugel mit anderem Radius bildet als der, die von der Gesamtheit der Informationsblöcke gebildet wird, oder eine andere Oberflächenaufteilung herstellt.

15. Verfahren nach einem der Ansprüche 1 bis 14, **dadurch gekennzeichnet, daß** mindestens ein Informationsblock auf seiner Oberfläche den Kurvenverlauf variabler Daten darstellt.

16. Computer zum Verarbeiten und zum Anzeigen von Informationen auf einem Bildschirm in Form von Informationsblöcken und zu deren Auswahl, zur Durchführung eines Verfahrens nach einem der Ansprüche 1 bis 15, **dadurch gekennzeichnet, daß** die Informationsblöcke konzentrisch in Form von Tortendiagrammen oder Kugelsegmenten angeordnet sind.

17. Computer nach Anspruch 16, **dadurch gekennzeichnet, daß** mindestens einer der Informationsblöcke als eine Berührungsflächen ausgebildet ist, bei deren Berührung ein Schaltvorgang ausgelöst wird.

18. Computer nach einem der Ansprüche 16 oder 17, **dadurch gekennzeichnet, daß** die Randbereiche benachbarter Informationsblöcke nicht-geradlinig oder nicht-kreisbogenförmig ausgebildet sind und/oder mit Strahlen oder Texturen unterlegt sind.

19. Computer nach einem der Ansprüche 16 bis 18, **dadurch gekennzeichnet, daß** die Informationsblöcke unterschiedliche Größe haben.

20. Computer nach Anspruch 19, **dadurch gekennzeichnet, daß** die Größe der Informationsblöcke variabel ist.

21. Computer nach einem der Ansprüche 16 bis 20, **dadurch gekennzeichnet, daß** die Farbe der Informationsblöcke unterschiedlich ist.

22. Computer nach Anspruch 21, **dadurch gekennzeichnet, daß** die Farbe mindestens eines Informationsblocks variabel ist.

23. Computer nach einem der Ansprüche 16 bis 22, **dadurch gekennzeichnet, daß** mindestens ein Informationsblock dazu eingerichtet ist, rhythmisch aufzublinken.

24. Computer nach einem der Ansprüche 16 bis 23, **dadurch gekennzeichnet, daß** mindestens eines der Informationsfelder mit einem Oberflächenmuster oder einer Oberflächentextur versehen ist.

25. Computer nach Anspruch 24, **dadurch gekennzeichnet, daß** die Oberflächentextur variabel ist.

26. Computer nach Anspruch 25, **dadurch gekennzeichnet, daß** die Oberflächentextur rhythmisch verlaufend variabel ist, so daß bevorzugt konzentrisch auseinanderlaufende oder zusammenlaufende oder das Informationsfeld überquerende Wellenmuster entstehen.

27. Computer nach einem der Ansprüche 16 bis 26, **dadurch gekennzeichnet, daß** die Vergrößerung, die Farbe, die Textur und/ oder der Rhythmus des Aufblinkens eines Informationsblock vom der Größe abhängt, die der auf ihm angezeigte Wert erreicht.

28. Computer nach einem der Ansprüche 16 bis 27, mit einer einen Cursor ansteuernden Einrichtung, **dadurch gekennzeichnet, daß** die Kugelsegmente eine dreidimensionale Kugel bilden, die mittels des Cursors so drehbar ist, daß ein bestimmtes Informationsfeld in der Bildmitte angeordnet ist.

29. Computer nach Anspruch 28, **dadurch gekennzeichnet, daß** mindestens eines der Kugelsegmente gegenüber benachbarten vergrösserbar, verkleinerbar, hervorspringend oder zurücktretend ausgebildet ist, so daß es ein Segment einer Kugel mit anderem Radius bildet als der, die von der Gesamtheit der Informationsblöcke gebildet wird, oder eine andere Oberflächenaufteilung herstellt.
